# EUROPÄISCHE PATENTSCHRIFT

(11) **EP 3 321 545 B1**
(45) Veröffentlichungstag und Bekanntmachung des Hinweises auf die Patenterteilung: **29.09.2021**
(21) Anmeldenummer: 17189063.5
(22) Anmeldetag: 01.09.2017
(51) Int. Cl.: F16J 15/02, E21D 11/38

(54) **DICHTUNGSPROFIL, UND DAMIT AUSGESTATTETE DICHTUNGSANORDNUNG**
SEALING PROFILE, AND SEALING ARRANGEMENT EQUIPPED WITH THE SAME
PROFILÉ D'ÉTANCHÉITÉ ET DISPOSITIF D'ÉTANCHÉITÉ ÉQUIPÉ D'UN TEL PROFILÉ

(30) Priorität: 09.11.2016 DE 102016121452
(43) Veröffentlichungstag der Anmeldung: 16.05.2018
(73) Patentinhaber: CTS Cordes tubes & seals GmbH & Co. KG, 48308 Senden (DE)
(72) Erfinder: Höft, Heiko, 21357 Barum (DE); Schlautmann, Frank, 48167 Münster (DE)
(74) Vertreter: Habbel, Ludwig

(56) Entgegenhaltungen:
- DE-A1- 19 928 877
- DE-A1-102005 008 194
- GB-A- 2 541 978
- US-A1- 2009 148 658

## Beschreibung

Die Erfindung betrifft ein Dichtungsprofil, und eine damit ausgestattete Dichtungsanordnung.

Ein gattungsgemäßes Dichtungsprofil und eine Dichtungsanordnung unter Verwendung eines solchen Dichtungsprofils sind aus der DE 10 2005 008 194 A1 bekannt. Kanäle unterschiedlicher Geometrie sind in mehreren Reihen übereinander angeordnet, so dass zwischen den Kanälen aufrecht verlaufende Rippen und liegend verlaufende Brücken jeweils aus dem elastomeren Werkstoff des Dichtungsprofils geschaffen werden.

Auch aus der GB 2 541 978 A ist eine gattungsgemäße Tunnelsegmentdichtung bekannt, wobei diese die ein geformtes Profil mit mindestens zwei Verankerungsschenkeln zum Eingießen in ein Tunnelsegment umfasst; und die eine Vielzahl von Kanälen in Form von sich in Längsrichtung erstreckenden Bohrungen aufweist, sowie ein Verstärkungselement an der Basis der Dichtung. Weiterhin offenbart das Dokument ein Verfahren zum Bilden einer Tunnelsegmentdichtungsverbindung.

Aus der DE 199 28 877 A1 ist eine Dichtanordnung bekannt, bestehend aus zwei aneinanderstoßenden Bauteilen aus Beton, Stahl, Stahlbeton, Gusseisen oder anderen Materialien (z. B. Kunstharze), sowie aus einem in einer Aussparung einsitzenden Dichtprofil aus elastomerem Werkstoff (d. h. aus Gummi oder gummiähnlichem Werkstoff), das den Spalt zwischen den Bauteilen abdichtend überbrückt, und das mehrere Kanäle in unterschiedlichen Querschnittsformen aufweist, welche zudem in unterschiedlichen Höhen des Dichtprofils verlaufen. Dabei sind die Bauteile insbesondere Segmente, die zu einem rohrförmigen Tunnel zusammengesetzt sind, und zwar unter Bildung von Quer- und Längsfugen.

Auch aus der US 2009/148658 A1 ist eine Dichtungsanordnung bekannt, die sich aus mindestens zwei angrenzenden Bauteilen aus Beton, Stahl, Stahlbeton, Gusseisen oder anderen Materialien, sowie aus einem Dichtungsprofil aus Polymermaterial zusammensetzt, das den Spalt zwischen den beiden Bauteilen abdichtend überbrückt. Das Dichtungsprofil besteht aus zwei oder mehreren koextrudierten Dichtungsteilen, die eine Klebeverbindung bilden, wobei die Dichtungsteile aus mindestens zwei verschiedenen Arten von Polymermaterialien hergestellt werden, die sich durch gemeinsame elastische Eigenschaften, aber unterschiedliche mechanische und/oder chemische und/oder biologische Eigenschaften auszeichnen. Auch dieses Dichtungsprofil weist mehrere Kanäle in unterschiedlichen Querschnittsformen auf, welche in unterschiedlichen Höhen des Dichtungsprofils verlaufen

Das gattungsgemäße Dichtungsprofil dient dazu, aus mehreren Segmenten eine Rohrleitung zu schaffen, wobei die einzelnen Segmente, also die einzelnen Rohrleitungswandabschnitte, mittels des Dichtungsprofils gegeneinander abgedichtet werden. Dabei weist jeder Rohrleitungswandabschnitt an seinen Schmalkanten umlaufend ein solches Dichtungsprofil auf, so dass zwei benachbarte Rohrleitungswandabschnitte jeweils mit ihren jeweiligen Dichtungsprofilen aneinander anliegen und dementsprechend zwei benachbarte Dichtungsprofile den dichten Anschluss der beiden Rohrleitungswandabschnitte sicherstellen.

Typischerweise können die Rohrleitungswandabschnitte als so genannte Tunneltübbings ausgestaltet sein, also als rechteckige Wandabschnitte, so dass mehrere derartiger Tunneltübbings zu einem geschlossenen Ring angeordnet werden können und eine Vielzahl derartiger Ringe dann die gewünschte Rohrleitung schaffen. Die Rohrleitungswandabschnitte können aus mineralischen Baustoffen wie beispielsweise Beton bestehen, oder aus Metall oder anderen, geeigneten Materialien.

Problematisch ist in der Praxis häufig, dass die einzelnen Tunneltübbings, die zu einer Rohrleitung mit mehreren Metern Durchmesser zusammengesetzt werden, nicht mit einer labormäßigen Präzision zusammengefügt werden können; vielmehr sind benachbarte Rohrleitungswandabschnitte häufig mit einem Versatz von mehreren Zentimetern zueinander angeordnet . Für die verwendeten Dichtungsprofile bedeutet dies, dass diese sowohl bei einer vollflächigen Anlage aneinander als auch bei einem Versatz zueinander stets die gewünschte Dichtwirkung sicherstellen müssen.

Auch aus der DE 199 28 877 A1 und aus der DE 41 03 089 A1 sind Dichtungsprofile bekannt, welche jeweils aufrecht verlaufende Rippen und liegend verlaufende Brücken aufweisen sowie schräg verlaufende zusätzliche Stege.

Der Erfindung liegt die Aufgabe zugrunde, ein gattungsgemäßes Dichtungsprofil dahingehend zu verbessern, dass dieses auch bei einem Versatz zweier gleichartiger, aneinander anliegender Dichtungsprofile zuverlässig die Dichtheit der Dichtungsanordnung sicherstellt. Weiterhin liegt der Erfindung die Aufgabe zugrunde, eine Dichtungsanordnung unter Verwendung eines solchen Dichtungsprofils anzugeben, welche bei der Herstellung einer Rohrleitung die dichte Verbindung benachbarter Rohrleitungswandabschnitte sicherstellt.

Diese Aufgabe wird durch ein Dichtungsprofil nach Anspruch 1 und durch eine Dichtungsanordnung nach Anspruch 10 gelöst. Vorteilhafte Ausgestaltungen sind in den Unteransprüchen beschrieben.

Die Erfindung schlägt mit anderen Worten vor, die Mitte des Profilquerschnitts zu verstärken und zu diesem Zweck erstens die einzelnen Kanäle innerhalb der Reihen von Kanälen so anzuordnen und zueinander zu versetzen, dass sich bogenförmig gewölbt verlaufende Reihen ergeben. Daraus resultieren auch bogenförmig gewölbt verlaufende Brücken, welche die einzelnen benachbarten Reihen voneinander trennen. Die Stege, welche die Reihen der Kanäle und die Brücken queren, verlaufen in zwei unterschiedlichen Ausrichtungen: Einerseits werden erste, senkrecht verlaufende Rippen geschaffen, die eine optimale Stützwirkung für das Dichtungsprofil bewirken, wenn dieses in senkrechter Richtung belastet wird. Im Rahmen des vorliegenden Vorschlags wird bei Richtungsangaben wie "oben" oder "unten" davon ausgegangen, dass das Dichtungsprofil mit seiner Unterseite dem abzudichtenden Bauteil anliegt, beispielsweise dem erwähnten Tunneltübbing.

Durch die senkrecht verlaufenden Rippen wird eine Abstützung des Dichtungsprofils gewährleistet, wenn zwei gleichartige Dichtungsprofile einander anliegen und in senkrechter Richtung Presskräfte, d. h. Abdichtungskräfte, auf die beiden Dichtungsprofile wirken. Aufgrund des bogenförmigen Verlaufs der Kanalreihen und auch der Brücken ergeben sich jedoch auch strahlenförmig, V-förmig angeordnete Rippen, die schräg verlaufen und insofern bei einem Versatz von Dichtungsprofilen Kräfte aufzunehmen in der Lage sind, die schräg auf das Dichtungsprofil einwirken, nämlich die oben außerhalb der Mitte angreifen und schräg nach unten in Richtung zur Mitte der Unterseite des Dichtungsprofils gerichtet sind. Dadurch, dass auch diese schräg einwirkenden Druckkräfte durch die zweiten, schräg verlaufenden Rippen gut aufgenommen werden können, wird verhindert, dass das Dichtungsprofil unerwünscht stark komprimiert werden kann, was zu einer Undichtigkeit führen könnte.

Eine erste, nämlich im Wesentlichen senkrecht verlaufende Rippe verläuft in der Mitte des Profilquerschnitts stellt die sehr gute Leistung des Dichtungsprofils sicher, denn sie stützt das Profil sowohl bei einer vollflächigen Überdeckung zweier aufeinander aufliegender Dichtungsprofile, als auch wenn die beiden Dichtungsprofile einander versetzt anliegen. Bei starken Drücken, die auf das Dichtungsprofil einwirken, oder - bei einem entsprechenden Versatz - auch schon bei entsprechend geringeren Drücken können sich hohe Flächenpressen ergeben, die auf das Dichtungsprofil einwirken und das Dichtungsprofil stauchen. Falls das Dichtungsprofil in einer Nut geführt ist, wie dies beispielsweise bei Tunneltübingen typisch ist, und falls das Dichtungsprofil so weit gestaucht wird, dass es vollständig in die Nut eintaucht, so kann seine Dichtwirkung nicht mehr sichergestellt werden. Die verbesserte mechanische Stabilität, die das vorschlagsgemäße Dichtungsprofil aufgrund seiner mittleren senkrechten Rippe aufweist, verhindert eine unzulässig starke Stauchung des Dichtungsprofils, so dass dieses beispielsweise nicht mehr vollständig in die Nut eintauchen kann. Somit ist die gewünschte Dichtwirkung auch bei hohen, auf das Dichtungsprofil einwirkenden Flächenpressen sichergestellt.

Die gewölbt gebogenen Reihen und Brücken können vorteilhaft derart gewölbt verlaufen, dass sie im Wesentlichen einen gemeinsamen Mittelpunkt aufweisen. Dieser kann beispielsweise nahe der Unterkante in der Mitte des Profilquerschnitts liegen.

Für die Formgebung der Kanalquerschnitte kommen unterschiedliche Geometrien in Betracht. Vorteilhaft kann vorgesehen sein, dass nicht sämtliche Kanäle dieselbe Querschnittsgeometrie aufweisen, sondern dass die Kanäle vielmehr unterschiedliche Querschnittsformen aufweisen und zwar in der Weise, dass die Brücken zwischen den Reihen von Kanälen oder die Rippen, die sich zwischen benachbarten Kanälen und durch mehrere Reihen von Kanälen erstrecken, jeweils über ihre Länge eine im Wesentlichen gleiche Breite aufweisen. Auf diese Weise wird eine optimale Stützwirkung der Brücken und Rippen begünstigt, indem nämlich lokale Schwächungen möglichst vermieden werden und vielmehr eine möglichst gleichmäßige Kraftaufnahme über die gesamte Länge der jeweiligen Brücke bzw. Rippe ermöglicht wird.

Bei der Formgebung der jeweiligen Kanalquerschnitte kann vorteilhaft ein Kanal eine im Wesentlichen dreieckige Querschnittsgeometrie aufweisen, wobei durch abgerundete Ecken eine solche Querschnittsgeometrie tatsächlich ohne eine echte "Ecke" ausgeführt sein kann. Alternativ kann ein Kanal auch einen im Wesentlichen trapezoiden Querschnitt aufweisen oder einen im Wesentlichen kreisrunden Querschnitt oder auch von den genannten Querschnittsgeometrien abweichend einen vieleckigen Querschnitt, um einerseits die gewünschte Nachgiebigkeit und Stauchbarkeit des Dichtungsprofils mithilfe der Kanäle zu ermöglichen, andererseits jedoch auch die gewünschte Ausgestaltung der Brücken und Rippen zu erzielen.

Vorteilhaft kann das Dichtungsprofil unten in der Mitte einen Stützfuß aufweisen, also dort nicht eine Fehlstelle des elastomeren Werkstoffs im Profilquerschnitt aufweisen, sondern vielmehr dort elastomeres Material aufweisen. Hierdurch wird die mittlere erste Rippe praktisch nach unten bis an den unteren Rand des Dichtungsprofils verlängert, so dass die weiter oben erwähnte Stützwirkung dieser mittleren ersten Rippe - und somit die mechanische Stabilisierung des Dichtungsprofils gegen unerwünschte Stauchungen - verbessert wird. Zudem können sowohl senkrechte Stützkräfte als auch die schräg einwirkenden, von den schrägen Rippen aufgenommenen Kräfte im Bereich des mittleren Stützfußes aufgenommen werden, so dass sich das Dichtungsprofil in diesem Bereich an dem Bauteil abstützen kann, dem das Dichtungsprofil anliegt. Dieser Bereich kann beispielsweise der Nutgrund einer das Dichtungsprofil führenden Nut eines Tunneltübbings sein.

Vorteilhaft können drei erste, also im Wesentlichen senkrecht verlaufende Rippen vorgesehen sein, von denen die mittlere in der Mitte des Profilquerschnitts verläuft. Insbesondere wenn unten in der Mitte des Dichtungsprofils ein Stützfuß vorgesehen ist, kann dementsprechend die Stützkraft dieser mittleren Rippe in das Bauteil eingeleitet werden, dem das Dichtungsprofil anliegt.

Eine vorteilhafte Dichtungsanordnung kann vorschlagsgemäß darin bestehen, dass zwei Rohrleitungswandabschnitte einander benachbart angeordnet sind, wobei an beiden Rohrleitungswandabschnitten jeweils ein vorschlagsgemäß ausgestaltetes Dichtungsprofil angeordnet ist. Dabei sind diese beiden Rohrleitungswandabschnitte so angeordnet, dass die beiden Dichtungsprofile einander anliegen und die Abdichtung zwischen den beiden Rohrleitungswandabschnitten gewährleisten.

Die beiden Rohrleitungswandabschnitte können dabei jeweils vorteilhaft als Tunneltübbing ausgestaltet sein, nämlich in Form eines gebogenen Rechtecks, wobei die vorschlagsgemäßen Dichtungsprofile ringsum, also an den vier umlaufenden Kanten dieses gebogenen Rechtecks angeordnet sind. Auf diese Weise können mehrere Tunneltübbings gemeinsam einen geschlossenen Ring als Rohrleitungsabschnitt schaffen und mehrere derartige Ringe aneinander gereiht die gewünschte Rohrleitung bilden, wobei eine Abdichtung der einzelnen Abschnitte mithilfe der vorschlagsgemäßen Dichtungsprofile sichergestellt ist.

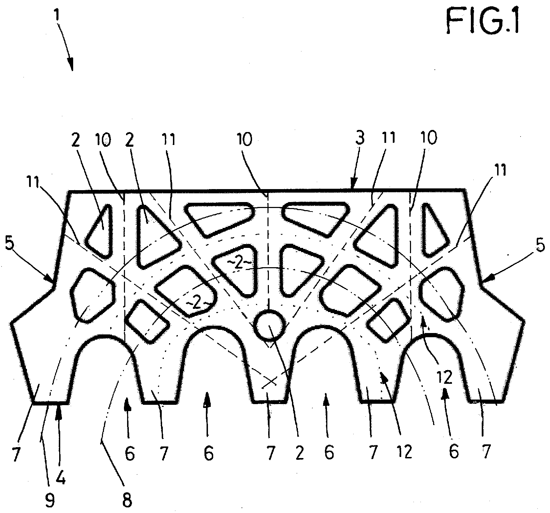

Ein Ausführungsbeispiel der Erfindung wird anhand der rein schematischen Darstellungen nachfolgend näher erläutert. Dabei zeigt
- Fig. 1: einen Querschnitt durch ein Dichtungsprofil,
- Fig. 2: eine Dichtungsanordnung unter Verwendung zweier gleichartiger Dichtungsprofile, und
- Fig. 3: eine Dichtungsanordnung ähnlich der von Fig. 2, wobei jedoch die beiden Dichtungsprofile gegeneinander versetzt angeordnet sind.

In den Zeichnungen ist mit 1 jeweils ein Dichtungsprofil gekennzeichnet, welches aus einem elastomeren Werkstoff besteht und eine Vielzahl von Hohlräumen aufweist, die sich über die gesamte Länge des Dichtungsprofils 1 erstrecken und die als Kanäle 2 bezeichnet sind. Das Dichtungsprofil 1 weist eine Oberseite 3 auf, eine Unterseite 4 und zwei gegenüberliegende Längsseiten 5. An der Unterseite 4 weist das Dichtungsprofil 1 mehrere Ausnehmungen 6 auf und, abwechselnd mit den Ausnehmungen 6, Stützfüße 7.

Die Kanäle 2 sind in Form zweier bogenförmiger Reihen 8 und 9 angeordnet: Eine untere bzw. innere Reihe 8 ist strichpunktiert angedeutet und verläuft durch Kanäle 2, die annähernd rechteckige sowie annähernd dreieckige Querschnittsgeometrien aufweisen. Eine obere bzw. äußere Reihe 9 ist ebenfalls strichpunktiert angedeutet und verläuft durch Kanäle 2 mit vieleckigen sowie annähernd dreieckigen Querschnittsgeometrien. Ein tiefster bzw. mittlerer Kanal 2 ist oberhalb des mittleren Stützfußes 7 angeordnet. Abgesehen von diesem unteren bzw. mittleren Kanal 2 befindet sich oberhalb des Stützfußes 7 ausschließlich der elastomere Werkstoff des Dichtungsprofils 1, so dass in der Mitte des Dichtungsprofils 1 eine erste, senkrecht verlaufende Rippe 10 geschaffen wird, die gestrichelt angedeutet ist. Abgesehen von dieser mittleren senkrechten Rippe 10 sind durch die Formgebung und Abstände der einzelnen Kanäle 2 noch zwei weitere, äußere Rippen 10 geschaffen, die ebenfalls als erste Rippen 10 senkrecht verlaufen.

Zusätzlich zu diesen ersten Rippen 10 sind im Dichtungsprofil 1 zweite, schräg verlaufende Rippen 11 vorgesehen, wobei die gestrichelten Linien der ersten und zweiten Rippen 10 und 11 jeweils über den elastomeren Werkstoff hinaus verlängert sind. Dadurch wird deutlich, dass die Kraftlinien sich nahe des mittleren unteren Kanals 2 und in dem darunter befindlichen Stützfuß 7 treffen.

Aus dem elastomeren Werkstoff sind abgesehen von den eingezeichneten Rippen 10 und 11 auch Brücken gebildet, die bogenförmig zwischen den beiden benachbarten Reihen 8 und 9 der Kanäle 2 verlaufen sowie zwischen der unteren, inneren Reihe 8 und den Ausnehmungen 6 bzw. dem unteren, mittleren Kanal 2. Diese Brücken sind punktiert dargestellt und mit 12 gekennzeichnet. Die Brücken 12 sowie die Reihen 8 und 9 verlaufen dabei annähernd konzentrisch, so dass sie annähernd einen gemeinsamen Mittelpunkt aufweisen, der unterhalb des unteren, mittleren kreisrunden Kanals 2 liegt.

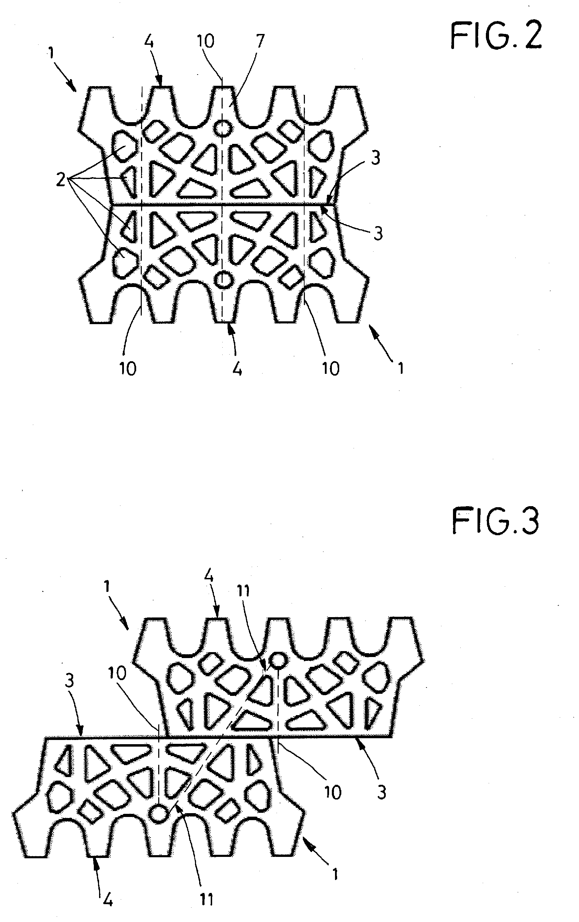

In Fig. 2 sind zwei gleichartige Dichtungsprofile 1 dargestellt, die einander vollflächig mit ihren jeweiligen Oberseiten 3 anliegen. Um eine sichere Dichtwirkung zu gewährleisten, liegen die beiden Dichtungsprofile 1 aneinander mit einem gewissen Druck an. Um eine unerwünschte Nachgiebigkeit der Dichtungsprofile 1 zu vermeiden, stützen sich die jeweiligen Dichtungsprofile 1 über ihre ersten, senkrechten Rippen 10 an dem jeweiligen Bauteil an, welches an der Unterseite 4 eines Dichtungsprofils 1 an das jeweilige Dichtungsprofil 1 anschließt.

Fig. 3 zeigt eine Dichtungsanordnung ähnlich der von Fig. 2, wobei jedoch entsprechend der in der Praxis häufig anzutreffenden Montagesituation, die beiden Dichtungsprofile 1 einander nicht vollflächig anliegend, sondern mit einem Versatz. Bei dem in Fig. 3 dargestellten Ausführungsbeispiel ist ein seitlicher Versatz von etwa 20 mm dargestellt. Dabei ist ersichtlich, dass einerseits die beiden mittleren senkrechten Rippen 10 der beiden Dichtungsprofile 1 noch Stützwirkung entfalten, und dass darüber hinaus zwei zweite, schräge Rippen 11 Druckkräfte, die zwischen den beiden Dichtungsprofilen 1 herrschen, aufnehmen können, so dass auch bei diesem Versatz die schräg zwischen den beiden Dichtungsprofilen 1 wirkenden Kräfte gut aufgenommen werden können.

## Patentansprüche

1. Dichtungsprofil (1) aus einem elastomeren Werkstoff, wobei der Querschnitt des Dichtungsprofils (1) eine zur Anlage an dem abzudichtenden Bauteil vorgesehene so genannte Unterseite (4) aufweist, sowie eine Oberseite (3), und zwei einander gegenüberliegende Längsseiten (5), und wobei das Dichtungsprofil (1) in seinem Querschnitt folgende Merkmale aufweist:
• mehrere voneinander beabstandete, als Kanäle (2) bezeichnete Hohlräume,
• wobei mehrere Kanäle (2), eine Reihe (8, 9) bildend, nebeneinander angeordnet sind
• und mehrere Kanäle (2) übereinander angeordnet sind,
• Stege, die zwischen den Kanälen (2) verlaufen,
• wobei fluchtend übereinander angeordnete Stege aufrechte Rippen (10, 11) schaffen
• und fluchtend nebeneinander angeordnete Stege liegende Brücken (12) schaffen,
• die nebeneinander in einer Reihe (8, 9) angeordneten Kanäle (2) zueinander höhenversetzt sind,
wobei ein seitlicher, äußerer Kanal (2) gegenüber einem in der Reihe (8, 9) weiter innen angeordneten Kanal tiefer angeordnet ist,
derart, dass die Reihe (8, 9) bogenförmig nach oben gewölbt verläuft,
• zwei derartige bogenförmige Reihen (8, 9) durch eine durchgängige, ebenfalls gebogen verlaufende Brücke (12) voneinander getrennt sind,
• die Kanäle (2) innerhalb einer Reihe (8, 9) sowie in übereinander verlaufenden Reihen (8, 9) derart voneinander beabstandet sind,
dass sie erste, im Wesentlichen senkrecht verlaufende Rippen (10) schaffen,
sowie zweite, schräg verlaufende Rippen (11), die jeweils, bezogen auf eine senkrechte Mittellinie durch den Profilquerschnitt, seitlich davon auf einer der beiden Seiten des Profilquerschnitts verlaufen,
• und eine zweite Rippe (11) von einem unteren, der Mitte des Profilquerschnitts näheren Ende zu einem oberen Ende verläuft, welches gegenüber dem unteren Ende seitlich weiter außen liegt,
**dadurch gekennzeichnet,**
**dass** eine erste Rippe (10), bezogen auf die senkrechte
Mittellinie durch den Profilquerschnitt, in der Mitte des Profilquerschnitts verläuft.

2. Dichtungsprofil nach Anspruch 1,
**dadurch gekennzeichnet,**
**dass** die gebogenen Reihen (8, 9) und Brücken (12) im Wesentlichen um einen gemeinsamen Mittelpunkt verlaufen.

3. Dichtungsprofil nach Anspruch 1 oder 2,
**dadurch gekennzeichnet,**
**dass** die Kanäle (2) unterschiedliche Querschnittsformen aufweisen,
derart, dass eine sich aus den Stegen ergebende Brücke (12) oder Rippe (10, 11) eine über ihre Länge im Wesentlichen gleiche Breite aufweist.

4. Dichtungsprofil nach Anspruch 3,
**dadurch gekennzeichnet,**
**dass** ein Kanal (2) einen im Wesentlichen dreieckigen Querschnitt aufweist.

5. Dichtungsprofil nach Anspruch 3,
**dadurch gekennzeichnet,**
**dass** ein Kanal (2) einen im Wesentlichen trapezoiden Querschnitt aufweist.

6. Dichtungsprofil nach Anspruch 3,
**dadurch gekennzeichnet,**
**dass** ein Kanal (2) einen im Wesentlichen kreisrunden Querschnitt aufweist.

7. Dichtungsprofil nach Anspruch 3,
**dadurch gekennzeichnet,**
**dass** ein Kanal (2) einen annähernd rechteckigen Querschnitt aufweist.

8. Dichtungsprofil nach einem der vorhergehenden Ansprüche,
**dadurch gekennzeichnet,**
**dass** das Dichtungsprofil (1) unten in der Mitte einen Stützfuß (7) aufweist.

9. Dichtungsprofil nach einem der vorhergehenden Ansprüche,
**gekennzeichnet durch**
drei erste, im Wesentlichen senkrecht verlaufende Rippen (10), wobei die mittlere dieser drei Rippen (10) in der Mitte des Profilquerschnitts verläuft.

10. Dichtungsanordnung,
wobei zwei Rohrleitungswandabschnitte einander benachbart angeordnet sind,
und an beiden Rohrleitungswandabschnitten jeweils ein nach einem der vorhergehenden Ansprüche ausgestaltetes Dichtungsprofil (1) angeordnet ist, derart, dass die beiden Dichtungsprofile (1) der beiden Rohrleitungswandabschnitte abdichtend aneinander anliegen.

11. Dichtungsanordnung nach Anspruch 10,
**dadurch gekennzeichnet,**
**dass** die beiden Rohrleitungswandabschnitte jeweils als Tunneltübbing in Form eines gebogenen Rechtecks ausgestaltet sind,
wobei ein Tunneltübbing an seinen vier umlaufenden Kanten jeweils ein Dichtungsprofil (1) nach einem der Ansprüche 1 bis 9 aufweist.

## Claims

1. Sealing profile (1) made of an elastomer material,
wherein the cross-section of the sealing profile (1) incorporates a so-called underside (4) that is intended for contact with the component part that is to be sealed and an upper side (3) and two longitudinal sides (5) opposing each other and wherein the sealing profile (1) incorporates in its cross-section the following features:
• a plurality of holes spaced apart from one another and referred to as "channels" (2),
• wherein a plurality of channels (2) that form a row (8, 9) are arranged one beside the other
• and a plurality of channels (2) are arranged one above the other,
• webs that extend between the channels (2),
• wherein webs that are arranged one above the other in alignment form upright ribs (10, 11)
• and webs that are arranged one beside the other in alignment form horizontal bridges (12),
• the channels (2) that are arranged one beside the other in a row (8, 9) are perpendicularly offset,
wherein a lateral, outer channel (2) is arranged lower than a channel that is arranged further inwards in the row (8, 9)
so that the row (8, 9) curves upwards and then downwards in a bow shape,
• two such bow-shaped rows (8, 9) are separated from each other by a bridge (12) that is likewise bow-shaped and extends all the way through,
• the channels (2) are spaced apart from each other in a row (8, 9) and in rows (8, 9) that extend one above the other in such a way that they form first ribs (10) that extend essentially perpendicularly (10)
and second ribs (11) that extend diagonally to the side of this centre line and on one of the two sides of the profile cross-section relative to a perpendicular centre line that extends through the profile cross-section,
• and a second rib (11) extends from a lower end that is nearer the middle of the profile cross section to an upper end that lies sideways further outwards than the bottom end,
**characterised in**
**that** a first rib (10) extends in the middle of the profile cross-section relative to the perpendicular centre line that extends through the profile cross section.

2. Sealing profile in accordance with claim 1, **characterised in that** the bow-shaped rows (8, 9) and bridges (12) extend essentially around a common centre point.

3. Sealing profile in accordance with claim 1 or claim 2, **characterised in that** the channels (2) have differently shaped cross-sections such that a bridge (12) or rib (10, 11) that is formed by the webs is essentially of the same width (12) along its length.

4. Sealing profile in accordance with claim 3, **characterised in that** one channel (2) has an essentially triangular cross-section.

5. Sealing profile in accordance with claim 3, **characterised in that** one channel (2) has an essentially trapezoidal cross-section.

6. Sealing profile in accordance with claim 3, **characterised in that** one channel (2) has an essentially round cross-section.

7. Sealing profile in accordance with claim 3, **characterised in that** one channel (2) has an approximately rectangular cross-section.

8. Sealing profile in accordance with any one of the foregoing claims, **characterised in**
**that** the sealing profile (1) incorporates in the middle at the bottom a support foot (7).

9. Sealing profile in accordance with any one of the foregoing claims, **characterised**
**by** three first ribs (10) that extend essentially perpendicularly, where the middle rib of these three ribs (10) extends along the middle of the profile cross-section.

10. Sealing arrangement,
wherein two pipe wall sections are arranged so as to be spaced apart from each other,
and a sealing profile (1) that is designed in accordance with any one of the foregoing claims is arranged on each of the pipe wall sections, in such a way that the two sealing profiles (1) of the two pipe wall sections lie against each other sealingly.

11. Sealing arrangement in accordance with claim 10, **characterised in that** each of the two pipe wall sections is designed as a tunnel lining in the form of a bowed rectangle,
where each tunnel lining incorporates on its four circumferential edges a sealing profile (1) in accordance with any one of claims 1 to 9.

## Revendications

1. Profilé d'étanchéité (1) en matériau élastomère,
sachant que la section du profilé d'étanchéité (1) présente un côté dénommé côté inférieur (4) prévu pour appliquer contre le composant à étancher, ainsi qu'un côté supérieur (3) et deux côtés longitudinaux (5) se faisant réciproquement face, et sachant que la section du profilé d'étanchéité (1) présente les particularités suivantes :
• plusieurs cavités distantes les unes des autres, dénommées canaux (2),
• sachant que plusieurs canaux (2) sont juxtaposés pour former une rangée (8, 9)
• et que plusieurs canaux (2) sont disposés superposés,
• des nervures circulant entre les canaux (2),
• sachant que des nervures superposées en alignement mutuel forment des ailettes (10, 11) verticales
• et que des nervures juxtaposées en alignement mutuel forment des ponts horizontaux (12),
• que les canaux (2) juxtaposés en rangée (8, 9) sont mutuellement décalés en hauteur,
sachant qu'un canal (2) latéral externe est disposé plus profond par rapport à un canal disposé en rangée (8, 9) plus loin à l'intérieur,
de sorte que la rangée (8, 9) a un tracé arqué convexe,
• deux rangées (8, 9) arquées de la sorte sont séparées l'une de l'autre par un pont (12) continu au tracé également arqué,
• les canaux (2) à l'intérieur d'une rangée (8, 9) ainsi qu'en rangées au tracé superposé (8, 9) sont distants les uns des autres de sorte qu'ils forment de premières ailettes (10) au tracé essentiellement vertical,
ainsi que de secondes ailettes (11) au tracé oblique qui - par rapport à une ligne médiane verticale traversant la section du profilé - circulent chaque fois à côté d'elles sur l'un des deux côtés de la section du profilé,
• et une seconde ailette (11) allant d'une extrémité inférieure plus proche du milieu de la section du profilé, vers une extrémité supérieure qui vis-à-vis de l'extrémité inférieure se trouve latéralement plus à l'extérieur,
**caractérisé en ce**
**qu'**une première ailette (10), par rapport à la ligne médiane verticale de la section du profilé, présente un tracé traversant la section du profilé en son milieu.

2. Profilé d'étanchéité selon la revendication 1, **caractérisé en ce que** les rangées incurvées (8, 9) et les ponts (12) présentent un tracé circulant essentiellement autour d'un point médian commun.

3. Profilé d'étanchéité selon la revendication 1 ou 2, **caractérisé en ce que** les canaux (2) présentent des formes de section différentes, de sorte qu'un pont (12) ou une ailette (10, 11) résultant des nervures présente sur sa longueur une largeur pour l'essentiel identique.

4. Profilé d'étanchéité selon la revendication 3, **caractérisé en ce qu'**un canal (2) présente une section pour l'essentiel triangulaire,

5. Profilé d'étanchéité selon la revendication 3, **caractérisé en ce qu'**un canal (2) présente une section pour l'essentiel trapézoïdale.

6. Profilé d'étanchéité selon la revendication 3, **caractérisé en ce qu'**un canal (2) présente une section pour l'essentiel circulaire.

7. Profilé d'étanchéité selon la revendication 3, **caractérisé en ce qu'**un canal (2) présente une section approximativement rectangulaire.

8. Profilé d'étanchéité selon l'une des revendications précédentes, **caractérisé en ce**
**que** le profilé d'étanchéité (1) présente en bas au milieu un pied d'appui (7).

9. Profilé d'étanchéité selon l'une des revendications précédentes, **caractérisé**
**par** les trois premières ailettes (10) au tracé essentiellement vertical, sachant que l'ailette médiane des trois ailettes (10) a un tracé situé au milieu de la section du profilé.

10. Dispositif d'étanchéité,
sachant que deux segments de paroi de conduite sont disposés au voisinage l'un de l'autre,
et que contre les deux segments de paroi de conduite est disposé respectivement un profilé d'étanchéité (1) configuré selon l'une des revendications précédentes,
de sorte que les deux profilés d'étanchéité (1) des deux segments de paroi de conduite appliquent l'un contre l'autre de manière à étancher.

11. Dispositif d'étanchéité selon la revendication 10, **caractérisé en ce que** les deux segments de paroi de conduite sont configurés respectivement en tube tunnel en forme de rectangle incurvé, sachant qu'un tube tunnel présente respectivement sur ses quatre bords circonférentiels un profilé d'étanchéité (1) selon l'une des revendications 1 à 9.
